# EUROPEAN PATENT APPLICATION

(11) **EP 4 760 197 A1**
(43) Date of publication of application: **17.06.2026**
(21) Application number: 24219306.8
(22) Date of filing: 12.12.2024
(51) Int. Cl.: G01B 5/00, B23Q 11/00, G05B 19/404

(54) **COORDINATE MACHINE WITH ADAPTIVE DAMPING UNIT**

(71) Applicant: Hexagon Innovation Hub GmbH, 9435 Heerbrugg (CH)
(72) Inventor: KHANENYA, Nikolay, 9000 St.Gallen (CH)
(74) Representative: Kaminski Harmann

(57) **Abstract**

The present invention relates to an adaptable damping unit (2, 2a-d) designed for integration into a kinematic chain of a machine (1) designed for coordinative measuring and/or coordinative manipulation of a workpiece (O). The adaptable damping unit (2, 2a-d) is configured for local adaptive damping of varying oscillations of a measuring and/or manipulation tool (4) connected to the endpiece (12) of the kinematic chain in course of operation of the machine (1). The adaptable damping unit (2, 2a-d) comprises an adaptable electro-mechanical damping element, characteristics of which are dynamically adjustable dependent on actual motion and/or position sensor data of the kinematic chain. These adjustable characteristics include at least one of the following: elastic, inertial, and/or energy dissipation characteristics.

## Description

The present invention relates generally to a coordinate measuring and/or processing machine.

Machines for inspection or processing of a workpiece in a targeted manner with determination of coordinates in a measuring or working space are known in the art. More particular, such coordinate machines are embodied as coordinate measuring machine (CMMs) or CNC-processing machines.

For example, it is common practice to manipulate a workpiece with such a robotic device, e.g. by cutting, drilling or polishing, according to nominal coordinates or to inspect objects during or subsequent to production on a coordinate positioning apparatus in order to check for correctness of predefined object parameters, like dimensions and shape of the object. For example, for measuring surface variations, measurement principles based on use of tactile sensors and of optical sensors are known in the art.

In a 3-D coordinate measurement and/or processing machine, a tool such as a measurement probe or sensor head or processing tool head or end effector is supported for movement along three, for example mutually perpendicular, axes (in directions X, Y and Z) or with regard to three or more degrees of freedom (DoFs) by a kinematic chain of a robot arm, which can include a plurality of transfer members connected together by joints. The end of the arm opposite the probe is typically coupled to a moveable or stationary base. Thereby, the payload can be guided to any arbitrary point in space of a volume of the coordinative machine whereby the actual position in space is monitored.

For position monitoring and coordinate data acquisition, in an embodiment of such a coordinate machine, a suitable arrangement of transducers or position encoders is able to precisely determine the position of the end piece of the kinematic chain relative to the base of the machine and, therefore, to determine the coordinates of a measurement or processing point on the object being approached by the mounted tool at the end of the kinematic chain.

Typically, a determination of movement is broken down into singular rotational degrees of freedom, measured individually. For example, regarding joints of the kinematic chain, each DoF is measured using a dedicated rotational transducer of a joint. At each point in operation space, the position of each of the joints must be determined at a given instant in time. Accordingly, each transducer outputs an electrical signal that varies according to the movement of the joint in that degree of freedom. Typically, the tool also generates a signal. These position signals and the tool signal are transferred through the arm to a recorder or analyzer. The position signals are then used to determine the coordinates of the measurement or processing tool within the machine's operation sphere.

With regard to precise determination of coordinates, there are several possible sources of error. In that context, it has to be considered that accelerations with respect to one axis of the machine, can cause linear or angular dynamic deflections of an arm structure of the coordinate measuring machine. Resonances or vibrations of machine parts when moving one frame component relative to another component are examples for dynamic errors. Moreover, errors emerging from vibrations coming from outside the machine are to be considered.

Such errors are also to be seen in context of weight reduction, in particular of elements of the kinematic chain, which is a main topic relating to the designs of coordinate machines. Movable machine components having less weight (and less stiffness) can be faster positioned or moved with less effort, reducing energy consumption. On the other hand, the influence of machine vibrations and torsions caused by reduced stiffness and (faster) movement of the machine components might increase with weight reduction of these parts. Thus, uncertainties of derived metrological values and errors occurring from such deformations and vibrations might increase accordingly.

Dynamic measurement errors may be reduced by taking measurements at reduced or low accelerations, which however disadvantageously prolongs operation time per action and thus reduces productivity as more time is needed per workpiece or processing step.

Other approaches known in the art of coordinate machine operation are trying to avoid deflections, vibrations and/or oscillations caused by the acceleration of the machine by a technology called input-shaping, which controls the regulating variable (force or current) of a propulsion motor, in such a way as to bypass some mechanical resonances and avoid a stimulation of known resonance frequencies, determined by calculation or calibration.

It is also known to actively counterforce oscillations by an accordingly manipulated variable on the output to the driving actuator control or to counterforce using additional controllable actuators attached to one of the machine's structural components. Examples for such actuators which apply a controlled force on a machine part for forced suppression of oscillations or vibrations are piezo actuators or pneumatic actuators. However, such additional actuation needs additional effort and can itself be a source of vibrations and errors.

Above that, for handling above mentioned errors, in particular dynamic errors, with known methods, usually an elaborate model of the coordinate machine is to be established and defined, wherein a positioning behaviour of especially the kinematic chain is enabled to be described based on that model.

Hence, though there are some approaches known in the art of coordinate machines to reduce errors relating to vibration or oscillations of the machine, these known approaches may not be adequate with regard to the high and ever increasing precision demands of coordinate machines and show drawbacks as indicated above, in particular are cost-intensive as needing particular additional hardware or software or only able to cope with certain, in particular pre-determined frequencies.

It's therefore an object of the present invention to improve a coordinate measurement and/or manipulation machine.

It is a further object to provide a coordinate measurement and/or manipulation machine with improved coordinative precision.

It is still another object to provide a coordinate measurement and/or manipulation machine with reducing or removing dynamic errors.

These objects are achieved by realising the features of the independent claims. Features which further develop the invention in an alternative or advantageous manner are described in the dependent patent claims.

The present invention therefore relates to an adaptable damping unit adapted for integration into a kinematic chain, for example into the endpiece of the kinematic chain, of a machine designed for coordinative measuring and/or coordinative manipulation of a workpiece for local adaptive damping of varying oscillations of a measuring and/or manipulation tool connected to the endpiece of the kinematic chain in course of operation of the machine. As indicated, the term "tool" is to be understood in a broad sense and encompasses also non-processing, measuring instruments such as a sensor head or probe.

The adaptable damping unit comprises at least one adaptable electro-mechanical damping element, having a damping characteristics which is dynamically adjustable dependent on actual sensor data of position and/or motion of the kinematic chain.

Preferably, an energy dissipation property, elastic property and/or inertial property of the adaptable damping unit is adjustable. Hence, for instance a characteristics or capability of energy transformation for transforming kinematic energy / energy of a movement (vibration) of the kinematic chain can be dynamically altered dependent on said actual sensor data of the kinematic chain.

In some embodiments, the damping element comprises an electromagnet designed for well-defined adaption of a damping magnetic field. That is, a controllable magnetic field can be provided which can be varied in a known manner in accordance with a sensed property of the kinematic chain for damping based on magnetic forces between magnetic bodies.

As one option, such a controllable electromagnet is designed for well-defined varying induction of damping eddy currents, dependent on the sensor data of the kinematic chain.

As another option, the damping element comprises a fluid with well-defined adjustable viscosity, which fluid optionally is a electrorheological or magnetorheological fluid. In this case, such a controllable electromagnet is designed for well-defined adjustment of the fluid's viscosity.

In some embodiments, the damping unit is designed for multi-axes adaptive damping, i.e. for damping with respect to more than one axis of movement.

The present invention also relates to a measuring and/or processing coordinate machine designed for coordinative measuring and/or coordinative manipulation of a workpiece, the machine having a kinematic chain with an endpiece being designed for receiving a measuring and/or manipulation tool. The machine comprises an adaptable damping unit as claimed.

The damping unit is integrated in the kinematic chain (whereby "in" also includes arrangements of a damping unit at an outside of the kinematic chain). The machine further comprises a logic controller configured for receiving and processing actual positional and/or motion sensor data of the kinematic chain for dynamically adjusting the damping unit's adaptable damping characteristics dependent on the actual sensor data.

As an option, the adaptable damping unit is designed for dynamically adapting an eigenmode of the kinematic chain dependent on said actual position and/or motion sensor data.

Optionally, said actual sensor data is providable by at least one acceleration sensor of the machine, for instance a MEMS-acceleration sensor, situated for example at the machine's endpiece and/or tool. As a further option, the acceleration sensor is an integral part of an Inertial Measurement Unit (IMU) situated at the endpiece and/or tool.

As another option, said actual sensor data taken into account for damping adaption is providable by at least one position encoder integrated in the kinematic chain such as a rotary encoder at a joint of a machine's robot arm.

In some embodiments of the machine, the kinematic chain comprises a plurality of rotary joints connecting a plurality of links, wherein each rotary joint comprises at least one driving unit comprising a motor and at least one position encoder to determine at least one angle and to generate angular data. In these embodiments, said logic controller is configured to control the motor of each driving unit for driving the end piece relative to a machine's base for approaching a measuring and/or processing point of the workpiece, to receive the angular data and to determine the at least one spatial coordinate of point based on the angular data.

The present invention also relates to a method for adaptive damping of varying oscillations of a coordinate measuring and/or manipulation tool connected to an endpiece of a kinematic chain of a coordinate machine designed for coordinative measuring and/or coordinative manipulation of a workpiece, in particular a measuring and/or processing machine as claimed.

The method comprises -in course of operation of the machine-sensing an actual position and/or motion property of the kinematic chain and dynamically adjusting a damping characteristics of at least one adaptable electro-mechanical damping element being integrated into the endpiece of the machine dependent on the sensed actual position and/or motion property, in particular in form of damping unit as claimed. Thus, a real-time adaption to a determined variation of oscillation is conducted.

Optionally, said adaptable damping characteristics is characterized by at least one of a parameter of elasticity, an eddy current or inductivity parameter or a viscosity parameter.

The present invention also relates to a computer program product, preferably for the logic controller of the coordinate machine as claimed, having computer-executable instructions for performing the automatic execution of the steps of the method as claimed.

The present invention provides the advantages of a coordinate machine for object measuring and/or processing respectively a damping unit for such a coordinate machine which enables an adaption to a sensed or detected actual oscillation situation of the machine with regard to the endpiece or payload of the machine. In particular, a damping parameter can be varied in real-time so as to customize an eigenmode of the machine or a vibrational behavior, particularly an ability to "absorb" kinematic energy from any unwanted vibration at the end of the machine's kinematic chain. As a result, a vibration damping fitted to or "tailor-made" for the actual or current "on-site" sensed and damped vibration is provided.

Advantageously, various physical principles are suggested for damping whereby preferably magnetic effects are applied, either directly in form of magnetic forces or indirectly as a tool for manipulating a damping characteristics of a material, in particular for a change of viscosity as a particularly advantageous damping parameter.

Systems, methods and setups according to the invention are described or explained in more detail below, purely by way of example, with reference to working examples shown schematically in the drawing. The diagrams of the figures should not be considered as being drawn to scale. Where appropriate, the same reference signs are used for the same features or for features with similar functionalities. Different indices to reference signs are used to differentiate between different embodiments of the same or an equivalent feature that is shown exemplary. The term "substantially" is herein used to describe the fact that a certain value, arrangement or feature does not necessarily need to be 100% exact, but can maybe slightly aberrate, while still being within scope.

Specifically,
- Fig. 1: shows an exemplary embodiment of a coordinate machine with an adaptive damping unit according to the invention;
- Figs. 2a,b: show schemes of a first exemplary embodiment of an adaptable damping unit;
- Figs. 3a, b: show schemes of a another exemplary embodiment of an adaptable damping unit;
- Fig. 4: illustrates schematically another exemplary embodiment of an adaptable damping unit; and
- Fig. 5: illustrates schematically still another exemplary embodiment of an adaptable damping unit.

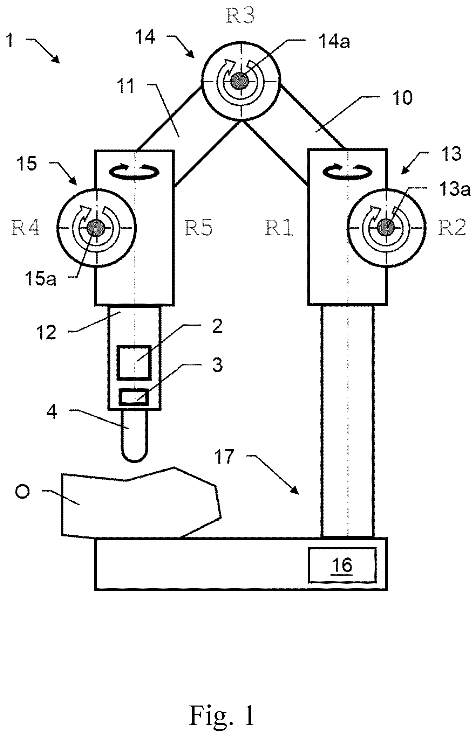

Fig. 1 shows an exemplary embodiment of a coordinate machine according to the invention in a schematic, simplified manner. The exemplary machine can be embodied as a coordinate measuring machine (CMM), however, it is explicitly noted that all teachings, features and disclosure are not restricted to a coordinative measuring machine but is likewise applicable to other coordinate machines of the type, in particular coordinate processing machines such as a coordinative computer numeric control (CNC) machine.

The machine 1 is configured for determining spatial coordinates of points on an object or workpiece O. It comprises a structure in form of a -in the example serial-robotic kinematic chain movably connecting a measurement or processing tool, in the following also denoted as payload 4, to a base 17. Other embodiments of metrological kinematic chains respective other metrological machine structures enabling movement of a payload 4 in a coordinate space or system for approaching an object O therein in a full-determined manner are also known in the art. Said payload 4 can for example be a probe or sensor head or machining head or a combination of both. In the example, the machine's structure comprises a robot arm having three rotary joints 13, 14, 15 and three links 10, 11, 12. The rotary joints 13-15 movably connect links 10-12 with each other and with the machine's base 17.

As shown in figure 1, a first rotary joint 13 provides movability of a first link 10 relative to the base 17 about a first and in the example also a second axis of rotation R1, R2. A second rotary joint 14 provides movability of a second link 11 relative to the first link 10 about a third axis of rotation R3. A third rotary joint 15 provides movability of a third link 12 relative to the second link 11 about a fourth and fifth axis of rotation R4 and R5. In particular embodiments, the first and second axes of rotation R1, R2 are orthogonally aligned, as are the fourth and fifth axes of rotation R4, R5.

Of course, the metrological robot arm of machine 1 may comprise fewer or more rotary joints than shown here to allow movement about e.g. more than five axes. In particular, any further rotary joint may allow movement about one or more rotary axes. Thus, for instance, a fourth rotary joint may provide movability of additional links about a sixth and seventh axes of rotation (not shown here).

As shown here, the tool or payload 4 may be connected to the third and last link 12, denoted as end piece of the kinematic chain. The tool 4 can be connectable or mountable by means of a connection element (and thus replaceable) or alternatively, the head 4 may be an integral part of the end piece 12.

Each of the joints 13-15 comprises an actuator, e.g. an electric motor, for moving the connected components relative to another, and a measuring unit with sensors such as angle encoders 13a, 14a, 15a for determining one or more angles between the driven connected components. Such rotary encoders 13a-15a preferably are an integral part of a rotary joint 13-15. A control and evaluation unit 16 of machine 1 comprises a logic controller and is configured to receive angular data related to the measured angles from the measuring units 13a-15a, to control the actuators for driving the payload 4 at end piece 12 relative to the base 17 for approaching a measurement or manipulation point on the object O, and to determine spatial coordinates of the point based on the angular data and, if applicable, on known dimensional data of the tool 4, whereby such data can be defined using a calibration procedure. In figure 1, control unit 16 is provided in the base 17. However, it may as well be provided in other parts of the machine 1 or as an external device.

The control and evaluation processor 16 of machine 1 is also connected to a damping unit 2 and a sensor 3, both integrated in the kinematic chain, in this example in the endpiece 12 of the machine 1 as shown in the figure. In principle, damping unit 2 and sensor 3 can be incorporated into one or more of the components of the kinematic chain or attached to its outside, the latter in particular in case the inventive damping is added as an upgrade to a conventional machine 1 as known in the art.

Using a position encoder as sensor such as one or more of above mentioned angle encoders 13a, 14a, 15a at a joint 13-15, actual motion or positional data of the kinematic chain such as an acceleration, velocity/speed or pose is sensed and evaluated by computer 16 for instantaneously responsive damping control as detailed below.

As shown in the exemplary figure 1, a sensor 3 for sensing motion or positional data of the kinematic chain can also be situated close to the tool 4, e.g. as close as structurally possible, for instance directly at point of mounting or at a connection interface. Such a sensor 3 can be integrated to the payload 4 itself, too, which payload 4 then comprises a data interface for transmitting sensor data to the controller 16. Sensor data transmission can be enabled either per wire or wireless (thereby, both a logic controller 16 and a sensor 3 can also be seen as interconnected parts of a damping unit 2 having a damping element controllable by the logic controller 16 in response to data gathered by sensor 3). In this case, sensor 3 is designed for sensing a motion, for example an acceleration, at the end of the machine's kinematic chain, according to the sensor's location, e.g. at the endpiece 12 (as shown in the figure) or at the tool 4 attached to or integrated in the endpiece 12.

Preferred examples for such motion sensors 3 are accelerometers or inertial measuring units (IMU), the latter not only measuring accelerations, but also angular rates and optionally a magnetic field. Sensor 3 can be embodied as a single angular sensor or a multi-axis sensor such as a 3-axis accelerometer. A sensor 3 may be embodied as a micro-electro-mechanical device such as a MEMS-accelerometer. Using sensor 3, vibrations or oscillations at the end of the kinematic chain of machine 1 can be determined.

As already indicated, the sensed actual position or motion data of the kinematic chain is transmitted to the controller 16 where it is evaluated and serves as basis for accordingly adapting control of the damping unit 2. Said otherwise, the damping unit 2 is adaptable, i.e. its damping characteristics are not invariable or fixed but can be changed and adjusted, which adjustment is controlled dependent on the position or motion information gathered with a sensor such as exemplary acceleration sensor 3 and/or position encoders 13a, 14a, 15a (anyhow) integrated at the machine's links.

More particularly, an energy dissipation ability/ characteristics or elastic characteristics or inertial characteristics of the adaptable damping unit 2 is dynamically adjustable. Such adaptability dependent on the actual sensed data of the kinematic chain can be provided by a variable elasticity, inductivity, inertia or viscosity of the damping unit 2.

For example, a frequency response or response frequency spectrum or curve of the machine's kinematic chain is adaptable as an immediate or direct reaction to the actual sensed kinematic data by adaption of the adaptable damping unit 2, e.g. with respect to frequency and/or amplitude of response.

In addition to actual sensor data, also pre-known data can be taken into account, such as calibration data or characteristic or specific data of a tool 4. For instance, in case of a machine 1 designed for mounting different tools 4, to more specifically adapt to each of the different specific tools 4, the weight or dimensions of which might result in different vibration behavior of end piece 12. Hence, for example a damping parameter (which can be the live adapted one parameter or another damping parameter of the adapted damping unit 2 or of another damping unit) can be pre-selected or pre-tuned by software or hardware adaption. For example, in embodiments having multiple damping units 2 or damping elements at hand, a pre-selection among them can be done. Relevant tool data can for example be automatically transferred to the controller 16 by an ID-chip of a tool 4 having stored such relevant tool specifications. However, any such additional data consideration is not mandatory but the adaptive damping can be based only on actual motion or position sensor data, for example sensed at or near the actual location to be in danger of perturbing oscillation.

Hence in any case, damping of the end of the kinematic chain is adaptable to an actual movement/positional characteristics detected by a sensor such as sensor 3 and/or encoder 13a-15a at this end. For example, an actual oscillation of the end piece 12 or tool 4 is sensed, using motion sensor 3. Oscillation damping by tunable damping unit 2 is adapted to a current oscillation state determined by the actual motion and/or position sensor data of at least one of sensors 3, 13a-15a, such that a targeted damping in real-time and in-situ can be enacted. The logic controller 16 dynamically adjusts the one or more damping parameters of the damping unit 2, based on the data of sensor 3, 13a-15a, in order to minimize or eliminate the amplitude of oscillations locally at the endpiece 12, hence at a specific point of the kinematic chain, in a pinpoint way with respect to location and time. In other words, the damping unit 2 is arranged and controlled in such a way as to arrive at a dynamic reduction or elimination of (varying) vibrations or oscillations specifically and precisely -and possibly exclusively- at the end piece 12 or tool 4.

Due to the suggested adaptive damping, any actual undesired oscillation -particularly originating from external ambient vibrations or from imperfect internal actuators (which vibrations are often amplified by the mechanical structure of the robot)- , can be locally and dynamically reduced or removed which otherwise would reduce precision of determination of position of an endpiece 12 respectively of a payload / tool 4 and thus lower metrological performance of the machine 1. Sensing and specifically damping oscillations at their actual effective place/location and time using the sensed motion or position data or oscillation data is in particular advantageous as the local oscillations or the vibrational spectrum at the endpiece 12 can vary not only due to ambient changes but the natural frequencies of a robot 1 usually are changing dynamically during operation, depending on the kinematic chain's posture respectively the position of the end piece 12 and/or tool 4.

Such an adaptive damping unit 2 can be designed to damp movements with respect to one or more movement axis or degrees of freedom (DoFs) or can comprise multiple adaptive damping elements. Also, a machine 1 can use more than the one exemplary motion sensor 3 or damper 2 and as a further option, an adjustable damping unit 2 can comprise or can be combined with fixed or invariable damping elements or units (for damping the same or other movement axes or for different points of damping in the kinematic chain). As said, different physical principles can be used for adaptive damping. Examples are inertial elements such as flywheels or gyroscopes, the inertia of which and therewith the damping characteristics can be adapted. Such a variable inertial element can be implemented for instance as a retractable flywheel, which is a rotating mass with a controllable distance to its rotary axis. If necessary, conversion between rotary motion and linear motion can be implemented using a standard mechanisms such as rack and pinion. Other and preferred examples of adaptable damping units 2 are described in more detail in context of the following figures.

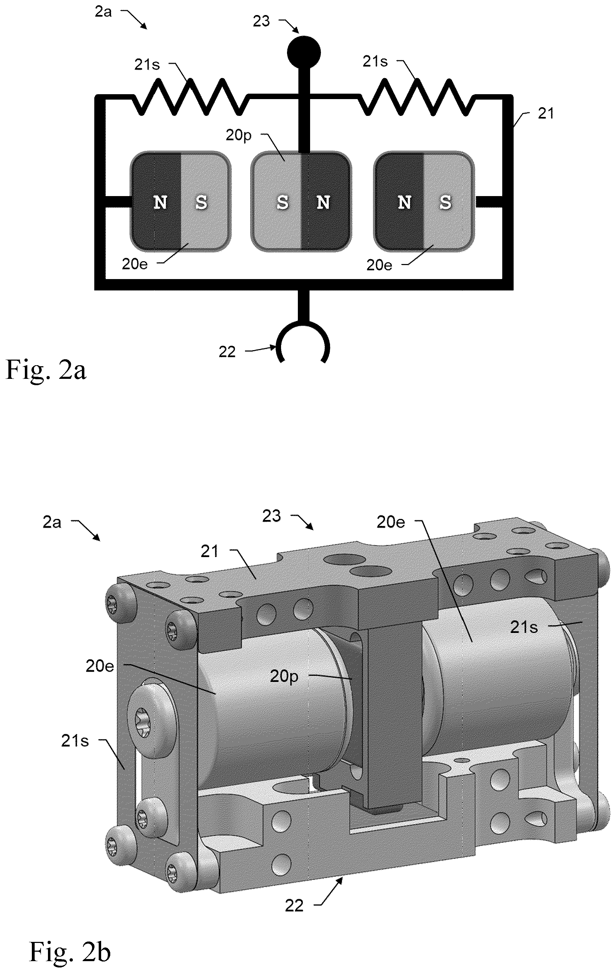

Figs. 2a, b show a first exemplary embodiment of an adaptive damping unit 2a, whereby figure 2a is cross-sectional 2D-scheme and figure 2b a schematic 3D-view of unit 2a.

This exemplary embodiment uses electromagnets for varying an elastic modulus or stiffness and could be denoted as an electromagnetic spring. Between a mechanical input link 22 and an output link 23, integrated in a mechanical frame structure 21, there is an arrangement of -in the example three- magnets 20e and 20p, the magnetic field in between basically defining the elasticity of the damper 2a. As at least one of the magnets is embodied as an electro-magnet, the magnetic field and thus the elasticity as damping parameter are variable. In the example, both outer magnets 20e, which are bonded to the input link 22, are electromagnets while the inner magnet 20p, which is bonded to the output link 23, is a permanent magnet.

Mechanical frame 21 of exemplary damping unit 2a comprises also mechanical, permanent flexures 21s which connect the input link 22 and the output link 23, in order to provide structural integrity and to define a minimum limit of stiffness, hence a limit for the adaptive damping parameter without electric current flowing through electromagnets 20e. Such definition of a limit of stiffness by invariable elements such as flexures 21s is not limited to this exemplary embodiment but can also be applied to other embodiments, e.g. as described below. Links 22 and 23 can be pushed away from each other by another two (secondary) permanent magnets to prevent the flexures 21s from buckling.

An electric current feeding the two outer magnets 20e is controllable by above mentioned logic controller in order to adjust their magnetic field and thus adapt the damping characteristics at output 23. Thus, a strength of magnetic field can be altered. The stiffness of this device 2a is proportional to the current that flows through both electromagnets 20e (plus a small offset due to the flexures 21s). The alteration can also include the case to completely shut off the electro-magnets, for instance if no or no significant oscillation is sensed by above mentioned sensor at the payload or if the frequency of an oscillation to be damped is covered by the damping unit 2a in a passive, off-state.

Preferably, both electromagnets 20e are controlled together or in a uniform manner but in any embodiment with an arrangement of multiple electromagnets 20e, each magnet 20e or subgroups of magnets could also be controlled individually. The latter would also allow not only to alter magnetic strength in a general manner but to alter an extent or form of an overall magnetic field and therewith adjust elasticity, for example in order to adapt damping individually with regard to a single or distinct DoF. In this case, for instance a "3D"-arrangement of spatially distributed magnets could be installed for providing a multidirectional damping unit (instead of the so-to-say linear "2D"-arrangement as shown, which provides a unidirectional variable elastic element). Of course, also several unidirectional elements can be stacked together to form a multidirectional damping unit 2a.

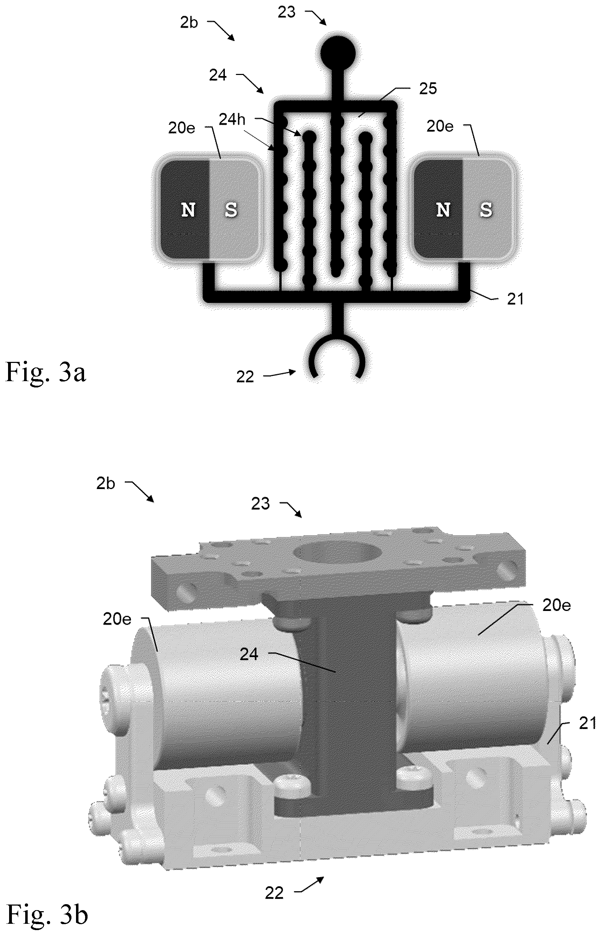

Figs. 3a, b show a second exemplary embodiment of an adaptive damping unit 2b, whereby figure 3a is cross-sectional 2D-scheme and figure 3b a schematic 3D-view of unit 2b.

This exemplary damping unit 2b makes use of a fluid 25 with adaptable viscosity as variable damping parameter. In the example, the fluid 25 is a magnetorheological fluid, i.e. a fluid with controllable mechanical characteristics in the presence of an external magnetic field, generally by several orders of magnitude and in times of the order of milliseconds. This ability to change shear strength or viscosity based on the applied magnetic field is applied to alter the damping characteristics of the damping unit 2b. Other variable fluids 25 with controllable physical properties such as electrorheological fluids resp. other physical principles for controlled variation of viscosity in order to adapt the damping characteristics of unit 2b such as temperature change can also be applied.

Thus, by controlling a magnetic field as variable, e.g. with above described logic controller of the coordinate machine, responding to sensed data of the kinematic chain, which the magnetorheological fluid 25 can be exposed to, the damping properties of the damping unit 2b can be adapted. The viscosity of damping device 2b and, therefore, the damping coefficient of device 2b can be controlled and set to be proportional to an electric current that flows through the electromagnets 20e. Thus, a variable viscosity is applied as damping parameter which can be adapted according to an actual current sensed property of the kinematic chain of the coordinate machine for real-time adaptive oscillation damping.

In the example, the fluid 25, e.g. in form of a dispersions of magnetically soft particles in a carrier liquid, is provided within a (sealed) container 24 attached to a frame structure 21 in between input link 22 and output link 23. One part of the container 24 is rigidly connected to the input link 22, another part to the output link 23 and the fluid 25 is contained in between. The container 24 can be exposed to a variable magnetic field by -in the example two-electromagnets 20e, e.g. arranged on two opposite sides. The electromagnets 20e are bonded to the input link 22 and the container 24 is bonded to both the input link 22 and output link 23.

When all electromagnets 20e are disabled respectively there is no magnetic field applied so that the fluid 25 is in a high-viscosity state, the container's structure allows for deformations -such as deformations originating from vibrations- without significant resistance (as already mentioned, as shown in the example of figures 2a,b, also here one or more fixed springs can be applied to define a cap for stiffness). However, the electromagnets 20e are enabled so that the fluid 25 is in a low-viscosity state due to the applied magnetic field, the container's structure resists deformations in any direction with a force that it positively correlated with the deformation speed (in particular oscillation frequency) and the intensity of the magnetic field which is controlled dependent on said live sensor data of the local motion. Hence, in this case an omnidirectional adjustable damping unit 2b is provided.

The damping performance can be enhanced in that container 24 comprises, for example, two sets of rigid helix columns 24h as indicated in figure 3a, one on the input side, and another on the output side. For example, two arrays or rigid screws 24h are bonded, for instance near the corresponding links 22, 23, to the opposite walls of container 24 and emersed into the fluid 25.

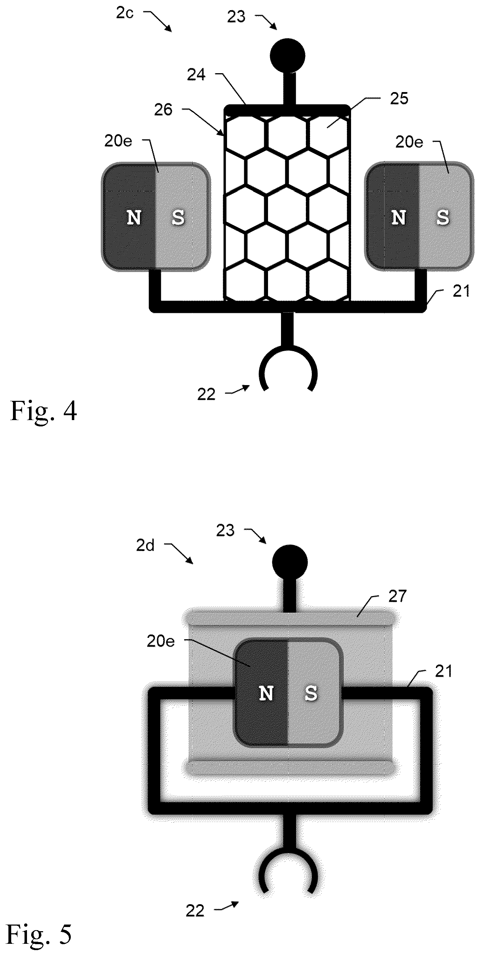

Fig. 4 shows a third exemplary embodiment of an adaptive damping unit 2c in a cross-sectional 2D-scheme.

Likewise the example described in context of figure 3a,b, a damping characteristics is adaptable by controlled change of viscosity. Also here, a magnetorheological fluid 25 is applied for adapting viscosity and therewith, e.g. its energy dissipation properties which can be altered using electromagnets 20e installed nearby fluid 25, in the example two magnets 20e at two opposite sides of the fluid 25. Again, the control of the magnetic field provided by electromagnets 20e depends on sensor data as described above such that in reaction to sensed motion data at the end of the kinematic chain of the coordinate machine, a mechanical damping ratio of output 23 to input 22 is variable.

This exemplary implementation of the concept of variable viscosity comprises a container 24 at frame 21 between input 22 and output 23, the container 24 having a flexible internal structure 26 similar to a lattice (for example, a diamondlike lattice) or a sponge that is made of a rubber-like polymer, for instance. For an actual 3-dimensional variable damping, the fluid 25 is able to flow throughout the entire lattice or sponge or in other words through the whole volume of container 24, but due to the lattice-like structure not flowing in straight lines.

In addition, an adaption -for example some sort of rough adaption or pre-adaption- might be implemented by an adaptive flow volume, for example in that container 24 comprises a multitude of chambers which can be connected and de-connected, e.g. by controllable shutters. Also, a magnetic field can provided by a battery of electromagnets, e.g. arranged as a row along a side of container 24, subgroups of which can be selectively activated or deactivated as already mentioned above for a rough or coarse damping adaption which can be fine-tuned on top by electric current control of active magnets 20e.

Fig. 5 shows a forth exemplary embodiment of an adaptive damping unit 2d, again in a cross-sectional 2D-scheme.

In this example, the damping unit 2d is an inductive one which uses tunable induction of eddy currents for controlled removal of vibration energy from the tip of the kinematic chain of the coordinate machine. In the exemplary implementation, a controllable electromagnet 20e, situated at the side of input 22 in a unit's frame 21, is arranged inside a conductive element 27 situated on the side of output 23.

Thus in this concept, for instance an electric magnet 20e is connected to the input link 22, while a conductive tube 27 around that magnet 20e is connected to the output link 23. Eddy currents that are induced in the tube by the motion of the magnet 20e are positively correlated with the speed of the magnet 20e.

Again, the magnetic field strength provided by one or more magnets 20e is controlled -dependent on motion or positional data of the kinematic chain, e.g. sensed by an accelerometer near the coordinate machine's tip as described above- and therewith the strength of the eddy currents induced in conductive counterpart 27.

A tube-like embodiment as exemplified can be seen as a unidirectional variable viscous damping element. For multidirectional damping, a multitude of such elements 2d can be integrated in the coordinate machine. Also, other structures than a tube 27 can be used, for example a structured extended plate as a 2D-area allowing for multidirectional damping. Structures of a conductive counterpart might also be used for variation of damping, e.g. in that different regions can be electrically connected or disconnected for controlled restriction of eddy currents on the "receiving" side, for instance for some sort of pre-tuning. As another example, also materials or structures with controllable, adaptable conductance might be used.

In more general terms, an adaption functionality or capability of damping can not only be implemented on side of the "emitter" (in this case electromagnet 20e) but also on side of the "receiver" (in this case conductive tube 27), i.e. an adaptable and controllable receiver.

A skilled person is aware of the fact that details, which are here shown and explained with respect to different embodiments, can also be combined with details from other embodiments and other permutations in sense of the invention.

## Claims

1. An adaptable damping unit (2, 2a-d) designed for integration into a kinematic chain of a measuring and/or processing machine (1), the measuring and/or processing machine (1) being designed for coordinative measuring and/or coordinative manipulation of a workpiece (O), whereby the adaptable damping unit (2, 2a-d) is designed for adaptive damping of varying oscillations of a measuring and/or manipulation tool (4) connected to an endpiece (12) of the kinematic chain in course of operation of the measuring and/or processing machine (1) and comprises at least one adaptable electro-mechanical damping element, a damping characteristics of which is dynamically adjustable dependent on actual position and/or motion sensor data of the kinematic chain.

2. The adaptable damping unit (2, 2a-d) according to claim 1,
**characterized in that**
the adaptable electro-mechanical damping element is designed to dynamically adapt at least one of an energy dissipation characteristics, elastic characteristics or inertial characteristics of the adaptable damping unit (2, 2a-d) dependent on the actual sensor data of the kinematic chain.

3. The adaptable damping unit (2, 2a-d) according to any one of claims 1 to 2,
**characterized in that**
the damping element comprises an electromagnet (20e).

4. The adaptable damping unit (2, 2a-d) according to claim 3,
**characterized in that**
the electromagnet (20e) is designed for well-defined adaption of a damping magnetic field.

5. The adaptable damping unit (2, 2a-d) according to claim 3 or 4,
**characterized in that**
the electromagnet (20e) is designed for well-defined varying induction of damping eddy currents.

6. The adaptable damping unit (2, 2a-d) according to any one of the preceding claims,
**characterized in that**
the damping element comprises a fluid (25) with well-defined adjustable viscosity.

7. The adaptable damping unit (2, 2a-d) according to any one of claims 3 to 5 and claim 6,
**characterized in that**
the fluid (25) is a magnetorheological or electrorheological fluid and the electromagnet (20e) is designed for well-defined adjustment of the fluid's viscosity.

8. A measuring and/or processing machine (1) designed for coordinative measuring and/or coordinative manipulation of a workpiece (O), the machine (1) having a kinematic chain with an endpiece being designed for receiving a measuring and/or manipulation tool (4),
**characterized in that**
the machine (1) comprises
• an adaptable damping unit (2, 2a-d) according to claim 1, integrated in the kinematic chain, and
• a logic controller (16) configured for receiving and processing actual positional and/or motion sensor data of the kinematic chain for dynamically adjusting the damping unit's adaptable damping characteristics dependent on the actual position and/or motion sensor data.

9. The machine (1) according to claim 8,
**characterized in that**
the adaptable damping unit (2, 2a-d) is designed for dynamically adapting an eigenmode of the kinematic chain dependent on said actual position and/or motion sensor data.

10. The machine (1) according to claim 8 or 9,
**characterized in that**
the actual positional and/or motion sensor data is providable by at least one position encoder (13a, 14a, 15a) integrated in the kinematic chain.

11. The machine (1) according to claim 10,
**characterized in that**
the kinematic chain comprises a plurality of rotary joints (13, 14, 15) connecting a plurality of links (10, 11, 12), wherein each rotary joint (13-15) comprises
• at least one driving unit comprising a motor and
• the at least one position encoder (13a, 14a, 15a), the position encoder being designed to determine at least one angle and to generate angular data, wherein the logic controller (16) is configured
• to control the motor of each driving unit for driving the end piece relative to a machine's base for approaching a measuring and/or processing point of the workpiece (O),
• to receive the angular data and
• to determine the at least one spatial coordinate of the point based on the angular data.

12. The machine (1) according to one of claims 8 to 11,
**characterized in that**
the machine (1) comprises an acceleration sensor (3) for providing said actual sensor data, in particular whereby the acceleration sensor (3)
• is situated at the endpiece (12) and/or tool (4) and/or
• is an integral part of an Inertial Measurement Unit.

13. Method for adaptive damping of varying oscillations of a measuring and/or manipulation tool (4) connected to an endpiece (12) of a kinematic chain of a measuring and/or processing machine (1), in particular according to claim 8, designed for coordinative measuring and/or coordinative manipulation of a workpiece (O), the method comprising in course of operation of the measuring and/or processing machine (1)
• sensing actual position and/or motion properties of the kinematic chain and
• dynamically adjusting a damping characteristics of at least one adaptable electro-mechanical damping element, in particular according to claim 1, being integrated into the kinematic chain of the machine (1), dependent on the sensed actual position and/or motion properties.

14. The method according to claim 13,
**characterized in that**
the damping characteristics is **characterized by** at least one of an
• elasticity,
• inertia,
• eddy current or
• viscosity
parameter.

15. A computer program product, in particular for a logic controller (16) of a measuring and/or processing machine (1) according to claim 8, having computer-executable instructions for performing the automatic execution of the steps of the method according to claim 13.
